# EUROPÄISCHE PATENTSCHRIFT

(11) **EP 1 388 504 B1**
(45) Veröffentlichungstag und Bekanntmachung des Hinweises auf die Patenterteilung: **21.06.2006**
(21) Anmeldenummer: 03015422.3
(22) Anmeldetag: 09.07.2003
(51) Int. Cl.: B65G 19/28

(54) **Rinnenschuss**
Scraper conveyor trough section
Couloir pour convoyeur à raclettes

(30) Priorität: 08.08.2002 DE 10236584
(43) Veröffentlichungstag der Anmeldung: 11.02.2004
(73) Patentinhaber: DBT GmbH, 44534 Lünen (DE)
(72) Erfinder: Vorsteher, Dirk, Dr., 33619 Bielefeld (DE); Merten, Gerhard, 44534 Lünen (DE); Fischer, Frank, 44534 Lünen (DE); Wirtz, Jörg, 45529 Hattingen (DE); Schmidt, Siegfried, 46242 Bottrop (DE); Broszat, Martin, 59349 Nordkirchen (DE); Hefferan, Alfred, Venetia, PA 15367-1055 (US); Cobley, John, Farnsfield, Nottinghamshire NG228EZ (GB); Mcandrew, Alister, Belper, Derby DE56IJE (GB); Losbrodt, Olaf, 44623 Herne (DE)
(74) Vertreter: Althaus, Arndt

(56) Entgegenhaltungen:
- EP-A- 0 525 926
- FR-A- 1 406 331
- GB-A- 1 350 262
- US-A- 4 373 757
- US-A- 5 871 261

## Beschreibung

Die Erfindung betrifft einen Rinnenschuß für untertägige Streb- und/oder Streckenförderer, mit einem Paar von aus Gußteilen bestehenden Seitenteilen, die einen sich über die Höhe von Untertrum und Obertrum erstreckenden, angegossenen Vertikalschenkel, einen nach außen rückspringenden unteren, angegossenen Flanschschenkel, einen nach innen vorspringenden, angegossenen Fußflansch, an dessen Unterseite ein den Untertrum nach unten abschließendes Bodenblech angeschweißt ist, sowie an den Stirnseiten angegossene Aufnahmeelemente von Rinnenschußverbindungsmittel umfassen, und mit einem vorzugsweise aus einem Walzblech bestehenden Förderrinnenboden siehe z.B. das Dokument EP-A-0 525 926.

Ein gattungsgemäßer Rinnenschuß, bestehend einerseits aus Gußteilen und andererseits aus Walzteilen, wird in Fachkreisen meist als Hybridrinne bezeichnet und ist beispielsweise aus der DE 39 05 324 A1 bekannt. Hybridrinnen kommen mit einer geringen Anzahl von Schweißnähten aus, da die gesamte Konstruktion des Seitenteils ggf. einschließlich der Seitenbegrenzungen zur Führung der Kratzer im Untertrum und der Aufnahme- bzw. Knebeltaschen, die Teile der Rinnenschußverbindungsmittel bilden, einstückig im Gußverfahren ausgebildet werden kann. An den Seitenteilen müssen anschließend nur noch der Förderrinnenboden und das Bodenblech des Untertrums angeschweißt werden. Bei der gattungsgemäßen Hybridrinne ist am abbaustoßseitigen Seitenteil eine Maschinenfahrbahn und am versatzseitigen Seitenteil eine Anschlußkonsole angeschweißt und zum Anschluß des Förderrinnenbodens weist der Vertikalschenkel beider Seitenteile innenseitig eine Rippe auf, die bis zur Stirnflächen des Fußflansches und des oberen, den Obertrum begrenzenden Profilstegs des Vertikalschenkels vorkragt.

Aufgabe der Erfindung ist es, einen Rinnenschuß in Konstruktion einer Hybridrinne zu schaffen, der hinsichtlich seines Gesamtgewichtes, der Anzahl der notwendigen Schweißnähte und der Anbindung des Förderrinnenbodens Vorteile gegenüber den bekannten Lösungen bietet.

Diese Aufgabe wird mit den in Anspruch 1 und 3 angegebenen Erfindungen gelöst. Vorteilhafte Ausgestaltungen sind in den Unteransprüchen angegeben. Gemäß einer ersten erfindungsgemäßen Lösung weist der Förderrinnenboden an beiden Längsseiten laschenartige Segmente auf, die in Schlitzausnehmungen in den Vertikalschenkeln der Seitenteile eingreifen und an der Außenseite der Seitenteile mit diesen verschweißt sind. Da die Segmente in die Schlitzausnehmungen eingreifen, wird eine sichere und fertigungstechnisch günstige Abstützung des Förderrinnenbodens an den Seitenteilen erzielt, wobei insbesondere für eine automatisierte Fertigung durch die Kombination der Segmente, Längsseiten und Schlitzausnehmungen nicht nur eine gleichbleibende Höhenlage des Förderrinnenbodens sondern auch ein gleichbleibender Abstand der Seitenteile voneinander gewährleisten werden kann. In bevorzugter Ausgestaltung sind die Flanschschenkel an der Unterseite mit gewichtsreduzierenden Einziehungen versehen, so daß das Gesamtgewicht der entsprechenden Rinnenschüsse trotz der aus Gußteilen bestehenden Seitenteile vergleichsweise niedrig gehalten werden kann.

Bei der alternativen erfindungsgemäßen Lösung ist der Förderrinnenboden am Scheitel der Innenseite des im wesentlichen W-förmigen, angegossenen Vertikalschenkels angeschweißt und der angegossene Flanschschenkel ist an seiner Unterseite mit gewichtsreduzierenden Einziehungen versehen. Auch hier kann für eine automatisierte Fertigung über die Lage des Scheitels eine gleichbleibende Höhe des Förderrinnenbodens gewährleistet werden.

In bevorzugter Ausgestaltung ist zumindest das abbaustoßseitige Seitenteil mit einer Maschinenfahrbahn für eine Gewinnungsmaschine versehen. Die integrierte Maschinenfahrbahn ist insbesondere dann vorteilhaft, wenn der Rinnenschuß für einen Strebförderer verwendet werden soll. Für eine automatisierte Fertigung bei niedrigen Gußform- und Lagerhaltungskosten kann es jedoch auch Vorteile bieten, sämtliche Rinnenschüsse sowohl für Streb- als auch Streckenförderer zumindest in den Gußteilen identisch zueinander auszubilden. Bei einer erfindungsgemäßen Ausführungsform kann die Maschinenfahrbahn integraler Bestandteil des Flanschschenkels sein und von dessen Oberseite gebildet werden, mithin bereits im Gußteil des abbaustoßseitigen Seitenteils vorgesehen werden. Der Vorteil einer am unteren Flanschschenkel ausgebildeten Maschinenfahrbahn ist, daß diese sich unmittelbar auf dem Liegenden abstützt und der Vertikalschenkel der Seitenteile dann vergleichsweise dünnwandig ausgebildet werden kann. Alternativ kann die Maschinenfahrbahn integraler Bestandteil des Vertikalschenkels sein, der hierzu einen Endabschnitt mit T-förmigem Querschnitt aufweist und mit der Oberseite des Querstegs die Maschinenfahrbahn bildet. Eine entsprechende Ausgestaltung sorgt für eine insgesamt kürzere Bauform des Rinnenschusses und damit des gesamten Kettenkratzförderers.

Bei Rinnenschüssen, die im untertägigen Bergbau zur Förderung von Kohle od.dgl. eingesetzt werden, ist bekannt, daß aufgrund der abrasiven Eigenschaften des zu fördernden Materials der Verschleiß der Seitenteile im Untertrum wesentlich geringer ist als der auftretende Verschleiß im Obertrum. Bei einer vorteilhaften erfindungsgemäßen Ausführungsform sind daher an den Seitenteilen im Bereich des Obertrums Seiten- und/oder Deckprofile auswechselbar angeschweißt, an denen sich die Kratzer mit ihren Kratzerenden im Obertrum führen und deren Innenseiten eine an die Kratzerenden angepaßte Profilform aufweisen. Bei einer Ausgestaltung können hierbei die Seiten- und Deckprofile aus separaten Elementen bestehen, wobei vorzugsweise die Deckprofile mit ihren Deckseiten eine Maschinenfahrbahn bilden. Alternativ oder zusätzlich können die Vertikalschenkel einen Endabschnitt mit T-förmigem Querschnitt oder einer Stufe od.dgl. aufweisen, auf dem die Deckprofile abgestützt aufliegen. Weiter alternativ können die Seiten- und Deckprofile auch integraler Bestandteil eines im Querschnitt T-förmigen Walzprofils sein, welches auswechselbar an den Seitenteilen im Bereich des Obertrums angeschweißt werden kann.

Bei sämtlichen erfindungsgemäßen Ausführungsformen eines Rinnenschusses bestehen die Aufnahmeelemente vorzugsweise aus randoffenen, angegossenen Taschen, in welche insbesondere Knebelbolzen mit Kopfverdickungen an beiden Enden einlegbar sind. Besonders günstig ist hierbei, wenn die Taschen bündig mit dem oberen Endabschnitt der Vertikalschenkel abschließen und die Seitenteile über die gesamte Höhe versteifen. Zweckmäßigerweise werden die aus Gußteilen bestehenden Seitenteile als zusätzliche Versteifung zu den Aufnahmetaschen dann mit angegossenen Vertikalrippen und/oder angegossenen Rückbalkenwiderlagern versehen, wobei besonders vorteilhaft ist, wenn die Vertikalrippen mit Aussparungen versehen sind, an denen Hebezeuge od.dgl. befestigbar sind. Die Aussparungen in den Vertikalrippen od.dgl. reduzieren zugleich das Gesamtgewicht der gegossenen Seitenteile und mithin auch der in Hybridbauweise ausgebildeten Rinnenschüsse. Sowohl bei den Rinnenschüssen mit W-för-migen Vertikalflanschen als auch bei den Rinnenschüssen mit Schlitzausnehmungen in den Vertikalschenkeln können diese oberhalb des Fußflansches eine über die Höhe von Untertrum und Obertrum im wesentlichen konstante Dicke aufweisen. Insbesondere bei den mit auswechselbaren Seiten- und/oder Deckprofilen versehenen Rinnenschüssen kann die Dicke des Vertikalschenkels im Bereich des Obertrums auch wesentlich niedriger ausfallen als seine Dicke im Bereich des Untertrums. Bei der Ausführungsform der Rinnenschüsse mit W-förmigen Seitenteilen ist besonders vorteilhaft, wenn der Scheitel des W-förmigen Vertikalschenkels gegenüber den Innenstirnflächen des Fußflansches und des oberen Stegendes nach außen versetzt liegt, so daß der Förderrinnenboden über die gesamte Breite des Rinnenschusses die Auflagefläche für die zu fördernde Kohle od.dgl. und die umlaufenden Kratzer bildet. Bei der Ausgestaltung der Rinnenschüsse mit auswechselbaren Seitenprofilen im Obertrum ist der Vertikalschenkelabschnitt im Bereich des Obertrums gegenüber dem im Bereich des Untertrums vorzugsweise um die Dicke des Seitenprofils nach außen versetzt, so daß im Obertrum und im Untertrum identische Abmessungen für die umlaufenden Kratzer vorliegen.

Weitere Vorteile und Ausgestaltungen der erfindungsgemäßen Rinnenschüsse ergeben sich aus der nachfolgenden Beschreibung von in der Zeichnung schematisch gezeigten Ausführungsbeispielen. In der Zeichnung zeigen:
- **Fig. 1**: perspektivisch einen Rinnenschuß in Hybridbauweise gemäß einem ersten Ausführungsbeispiel;
- **Fig. 2**: perspektivisch einen Rinnenschuß in Hybridbauweise gemäß einem zweiten Ausführungsbeispiel;
- **Fig. 3**: schematisch einen Vertikalschnitt durch das abbaustoßseitige Seitenteil eines Rinnenschusses gemäß einem dritten Ausführungsbeispiel;
- **Fig. 4**: schematisch einen Vertikalschnitt durch das abbaustoßseitige Seitenteil eines Rinnenschusses gemäß einer vierten Ausführungsform;
- **Fig. 5**: schematisch im Vertikalschnitt eines der Seitenteile eines Rinnenschusses gemäß einem fünften Ausführungsbeispiel; und
- **Fig. 6**: schematisch einen Vertikalschnitt durch einen Rinnenschuß gemäß einem sechsten Ausführungsbeispiel.

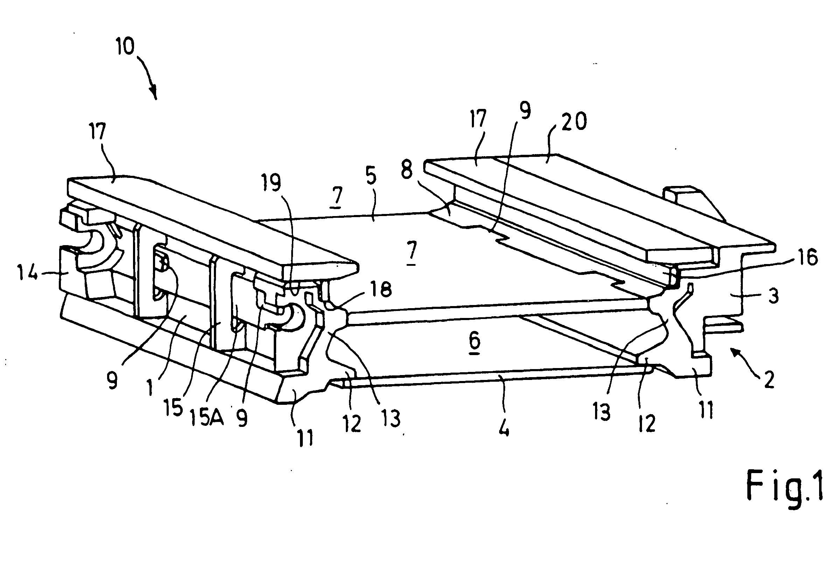

Der in Fig.1 mit 10 bezeichnete Rinnenschuß in Hybridbauweise in Ausführung für einen Strebförderer weist ein als Gußteil ausgeführtes abbaustoßseitiges Seitenteil 1 sowie ein als Gußteil ausgeführtes versatzseitiges Seitenteil 2 auf, welches über den angegossenen, nur angedeuteten Rückanschlag 3 am Schreitbalken eines nicht dargestellten untertägigen Ausbaus angeschlossen werden kann. An beiden Seitenteilen 1, 2 ist, wie an sich bekannt, ein Bodenblech 4 angeschweißt und ein Förderrinnenboden 5 befestigt, wobei das Bodenblech 4 den Unter- oder Rücklauftrum 6 eines Kettenkratzförderers und der Förderrinnenboden 5 den Ober- oder Fördertrum 7 eines Kettenkratzförderers nach unten begrenzt. Bei einem Kettenkratzförderer laufen dann, wie bekannt und nicht dargestellt, an einer Kratzerkette angeschlossene Kratzer um, die sich mit ihren Enden in speziellen Profilformen, die in den Seitenteilen 1, 2 jeweils ausgebildet sind, führen. Der Grundaufbau beider Seitenteile 1, 2 ist daher im Querschnitt annähernd identisch und beide Seitenteile 1, 2 umfassen einen nach außen rückspringenden unteren Flanschschenkel 11, einen nach innen vorspringenden, angegossenen Fußflansch 12, an dessen Unterseite das Bodenblech 4 angeschweißt ist sowie einen vertikal aufragenden und sich über Untertrum 6 und Obertrum 7 erstreckenden Vertikalschenkel 13. Wie Fig. 1 gut erkennen läßt, ist der angegossene Vertikalschenkel 13 im Abschnitt unterhalb des Förderrinnenbodens 5 an der Innenseite mit einer Wölbung versehen, die an die Profilform der Kratzerenden angepaßt ist und im Bereich des Untertrums 6 die Führung für die Kratzer bildet. Der Förderrinnenboden 5 selbst weist an seinen beiden Längsseiten 8 vier laschenförmige Segmentvorsprünge 9 auf, die Schlitzausnehmungen im Mittelabschnitt des Vertikalschenkels 13 durchgreifen und auf der Außenseite des Vertikalschenkels 13 über weiter nicht dargestellte Schweißnähte an den Seitenteilen 1, 2 angeschweißt sind. Die in den Schlitzausnehmungen sitzenden Segmente 9 stützen den Förderrinnenboden 5 an den Seitenteilen 1, 2 ab und die Schweißverbindung zwischen dem Förderrinnenboden 5 und den Seitenteilen 1, 2 liegt im geschützten Bereich außerhalb der Trumen 6, 7. Beide Seitenteile 1, 2 weisen, wie am versatzseitigen Seitenteil 1 zu erkennen, an beiden Stirnseiten angegossene Taschenaufnahmen 14 auf, in welche Knebel von Rinnenschußverbindungsmittel für eine zugfeste Verbindung hintereinander gesetzter Rinnenschüsse 10 eingelegt werden können. Die Taschenaufnahmen 14 versteifen zusammen mit Vertikalrippen 15, die mit gewichtsreduzierenden und ein Befestigen von Hebezeugen ermöglichenden Aussparungen 15A versehen sind, die Seitenteile 1, 2. Als weitere Besonderheit sind die Führungsprofile für die Kratzer im Obertrum 7 als auswechselbare Verschleißstücke ausgeführt. Hierzu sind an den Innenseiten der oberen Abschnitte der Vertikalschenkel 13 von Verschleißleisten gebildete Seitenprofile 16 sowie Deckprofile 17 auswechselbar angeschweißt. Sowohl die leistenförmigen Seitenprofile 16 als auch die Deckprofile 17 liegen in Stufen 18, 19 im oberen Abschnitt des Vertikalschenkels 13 der Seitenteile 1, 2 auf. Die Deckprofile 17 werden in Vertikalrichtung auch durch die Vertikalrippen 15 abgestützt. Die Deckprofile 17 und Seitenprofile 16 sind an den Innen- bzw. Unterseiten derart ausgebildet, daß sie die Profilform der Kratzerenden nachbilden. Die Deckprofile 17 können gleichzeitig mit ihren Oberseiten eine Maschinenfahrbahn bilden, die bei dem in Fig. 1 gezeigten Rinnenschuß 10 noch über einen am Vertikalschenkel 13 des versatzseitigen Seitenteils 2 angegossenen Horizontalsteg 20 verlängert sein kann. Die Flanschschenkel 11 beider Seitenteile 1, 2 sind mit nicht dargestellten, gewichtsreduzierenden Einziehungen an der Unterseite versehen. Die Profilform der Seitenteile 1, 2, insbesondere die Ausgestaltung der Flanschschenkel 11, des Fußflansches 12 und des Vertikalschenkels 13 kann variieren, ohne den Schutzbereich der anhängenden Ansprüche zu verlassen.

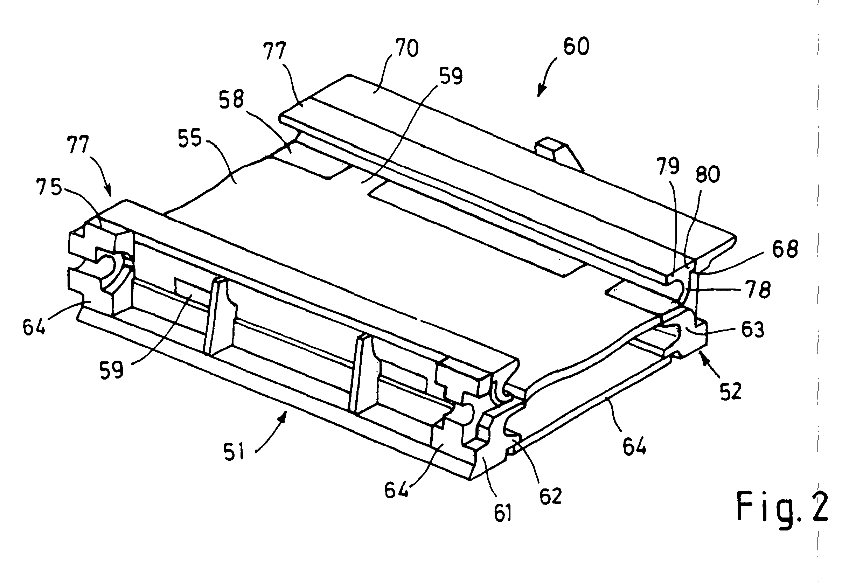

Fig. 2 zeigt perspektivisch ein zweites Ausführungsbeispiel eines Rinnenschusses 60 mit aus Gußteilen bestehenden Seitenteilen 51, 52, die jeweils einen Flanschschenkel 61, einen Fußflansch 62 und einen Vertikalschenkel 63 umfassen, wobei an der Unterseite der Fußflansche 62 ein Bodenblech 64 angeschweißt ist und wobei die Seitenteile 51, 52 mittels eines Förderrinnenbodens 55 verbunden sind, der an den Längsseiten 58 Segmente 59 aufweist, die Schlitzausnehmungen im Vertikalschenkel 63 durchfassen und an der Außenseite der Seitenteile 51, 52 angeschweißt sind. Die angegossenen Taschenaufnahmen 64 erstrecken sich hier mit ihrer Deckfläche 75 bis auf Höhe einer Maschinenfahrbahn, welche von der Deckseite der T-förmigen Seitenprofile 77 gebildet wird. Die im Querschnitt etwa T-förmigen Seitenprofile 77 umfassen einen annähernd vertikal ausgerichteten Profilsteg 78 und einen horizontal ausgerichteten Quersteg 79. Ein nach außen vorspringender Stegabsatz 80 am Quersteg 79 stützt sich auf einem Absatz 68 ab, der am oberen Endabschnitt der Vertikalschenkel 63 ausgebildet ist. Die beiden z.B. aus Walzprofilen bestehenden T-förmigen Seitenprofile 77 können über eine maschinell anbringbare Längsschweißnaht mit der Deckplatte 70 und/oder anderen Bereichen der gegossenen Seitenteile 51, 52 verbunden sein. Zum Austausch der Seitenprofile 77 werden diese Längsschweißnähte maschinell aufgetrennt. Die Profilstege 78 enden im Bereich der Segmente 59 unmittelbar über diesen und decken diese ggf. ab.

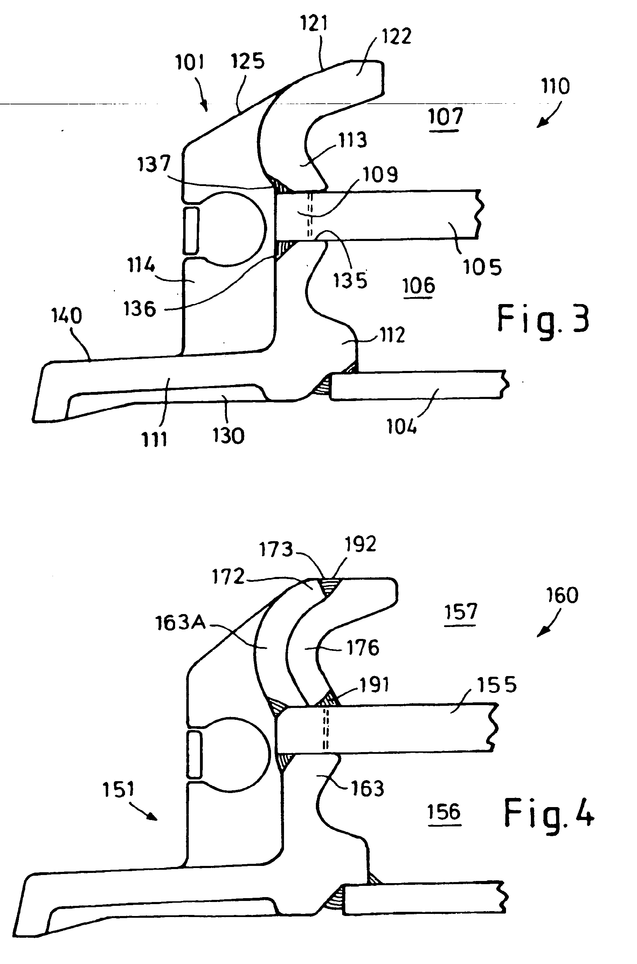

Beim Ausführungsbeispiel nach Fig. 3 ist vom Rinnenschuß 110 nur das versatzseitige Seitenteil 101 gezeigt, welches hier einen vergleichsweise langgezogenen, annähernd L-förmigen, angegossenen Flanschschenkel 111, einen vergleichsweise kurzen Fußflansch 112 und einen annähernd mit gleichbleibender Profildicke ausgeführten Vertikalschenkel 113 umfaßt. Das den Untertrum 106 nach unten begrenzende Bodenblech 104 ist mittels Längsschweißnähten unterhalb des Fußflansches 112 angeschweißt und die gewichtsreduzierenden Einziehungen 130 in der Unterseite des Flanschschenkels 111 sind gut zu erkennen. Auch hier weist der Förderrinnenboden 105 über seine Stirnseiten hinausragende Segmente 109 auf, die Schlitzausnehmungen 135 im Vertikalschenkel 113 des Seitenteils 101 durchgreifen und mittels der Längsschweißnähte 136, 137 mit der Außenseite des Vertikalschenkels 113 verschweißt sind. Die Taschenaufnahmen 114, die an allen Stirnenden des Rinnenschusses 110 angegossen sind, sind an ihrer Oberseite 125 schräg ausgebildet und gehen bündig in die Deckseite 121 des Endabschnitts 122 des Vertikalschenkels 113 über. Die Maschinenfahrbahn wird von der Oberseite 140 des freien und über die Taschenaufnahmen 114 hinauskragenden Abschnitts des Flanschschenkels 111 gebildet.

Der Rinnenschuß 160 nach Fig. 4 hat im wesentlichen denselben Aufbau wie der Rinnenschuß nach Fig. 3. Im Unterschied zum vorhergehenden Ausführungsbeispiel wird der Obertrum 157 von einer durchgehenden und beispielsweise aus einem Walzprofil bestehenden, profilierten Verschleißleiste 176 begrenzt, die über zwei Längsschweißnähte 191, 192 an der Oberseite des Förderrinnenbodens 155 bzw. an der Innenstirnfläche 173 des oberen Stegendes 172 des oberen Abschnitts des Vertikalschenkels 163 angeschweißt ist. Dieser obere Abschnitt 163A des Vertikalschenkels 163 ist gegenüber dem unteren, hier auch dickeren Abschnitts des Vertikalschenkels 163 um die Dicke der Profilleiste 176 versetzt, so daß die von den Seitenteilen 151 gebildeten Führungskanäle für die Kratzerenden im Untertrum 156 und im Obertrum 157 identische Abmessungen haben.

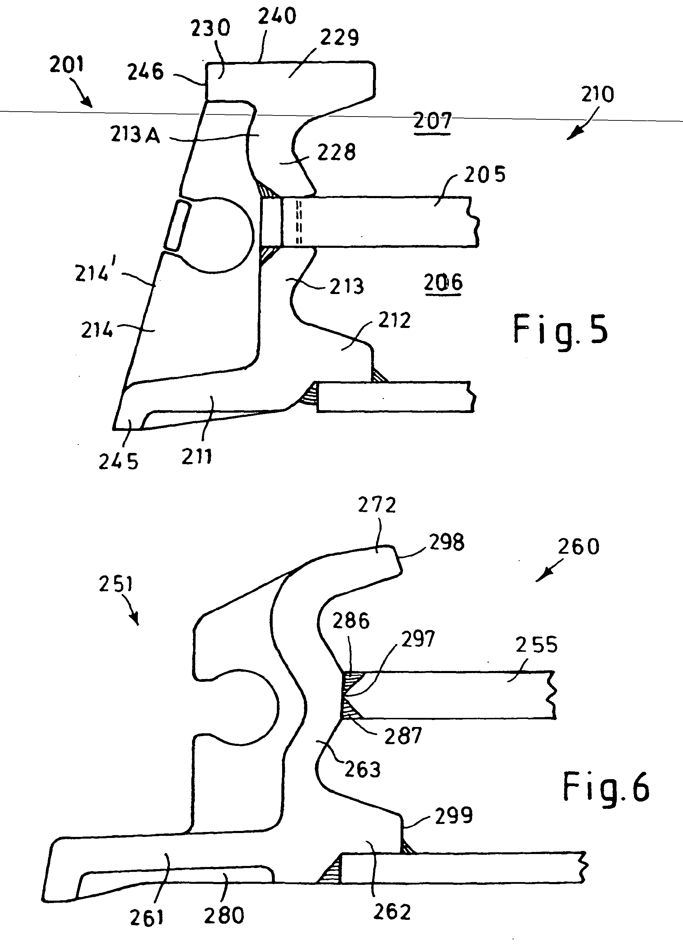

Beim Ausführungsbeispiel des Rinnenschusses 210 in Fig. 5 wird der Obertrum 207 unmittelbar von einem integralen Abschnitt 213A des Vertikalschenkels 213 begrenzt. Der obere Vertikalschenkelabschnitt 213A hat hier einen T-förmigen Querschnitt, umfassend den unteren, bis zum Förderrinnenboden 205 sich erstreckenden und an die Profilform der Kratzerenden an der Innenseite angepaßten Profilsteg 228 und den horizontalen Quersteg 229, der sich relativ zum Profilsteg 228 sowohl nach innen als auch mit einem Ansatz 230 nach außen erstreckt. Die Oberseite 240 des Horizontalstegs 229 kann eine Maschinenfahrbahn bilden und die angegossene Aufnahmetasche 214 erstreckt sich zwischen dem Flanschschenkel 211 und dem Ansatz 230, um die Maschinenfahrbahn zusätzlich abzustützen. Die Außenseite 214' der Aufnahmetasche 214 ist schräg ausgebildet, so daß sie bündig in den Fußabsatz 295 am Flanschschenkel 211 und in die Außenstirnfläche 296 am Ansatz 230 des Horizontalschenkels 229 übergeht. Fig. 5 zeigt in Abweichung von den vorherigen Ausführungsbeispielen, daß sich der Fußflansch 212 auch vergleichsweise weit in den Untertrum 206 hinein erstrecken kann.

Bei dem in Fig. 6 gezeigten Rinnenschuß 260 mit einem aus einem Gußteil bestehenden, hier dargestellten abbaustoßseitigen Seitenteil 251 und einem zweiten, identischen und nicht dargestellten versatzseiten Seitenteil hat der Vertikalschenkel 263 im Querschnitt ein W-förmiges Profil und der Förderrinnenboden 255 ist am Scheitel 297 dieses im Querschnitt W-förmigen Vertikalschenkels 263 angeschweißt. Die Längsseiten des Förderrinnenbodens 255 können hierzu spitz zulaufen oder angefast sein, um an der Ober- und Unterseite für das Verschweißen mit den Längsschweißnähten 286, 287 günstige Nuten zu schaffen. Die Längsschweißnähte 286, 287 liegen innerhalb der Trumen. Die Dicke des Vertikalschenkels 263 ist bis zur Innenstirnfläche 298 am oberen Stegende 272 des Vertikalschenkels 263 annähernd konstant und die Anschweißposition des Förderrinnenbodens 255 am Scheitel 297 liegt gegenüber den oberen und unteren Innenstirnflächen 298, 299 des Stegendes 272 des Vertikalschenkels bzw. des Fußflansches 262 nach außen versetzt. Ein Austausch des Förderrinnenbodens 255 erneuert dann die gesamte untere Führungsfläche für die Kratzer und das zu fördernde Material.

Für den Fachmann ergeben sich aus der vorhergehenden Beschreibung eine Reihe von Abweichungen, die in den Schutzbereich der anhängenden Ansprüche fallen sollen. Die Zeichnungen zeigen nur Ausführungsbeispiele. Die Abmessungen, Dicken und Profilformen der einzelnen Gußteile können variieren und es können zusätzliche gewichtsreduzierende Einziehungen in den Gußteilen vorgesehen sein.

## Patentansprüche

1. Rinnenschuß für untertägige Streb- und/oder Streckenförderer, mit einem Paar von aus Gußteilen bestehenden Seitenteilen (1; 51; 151), die einen sich über die Höhe von Untertrum (6: 56; 156) und Obertrum (7: 57; 157) erstreckenden Vertikalschenkel (13; 63; 163), einen nach außen rückspringenden unteren Flanschschenkel (11; 61), einen nach innen vorspringenden Fußflansch (12; 62; 162), an dessen Unterseite ein den Untertrum nach unten abschließendes Bodenblech (4; 64) angeschweißt ist, sowie an den Stirnseiten angegossene Aufnahmeelemente (14; 64) von Rinnenschußverbindungsmitteln umfassen, und mit einem vorzugsweise aus einem Walzblech bestehenden Förderrinnenboden (5; 55; 155), der an beiden Längsseiten laschenartige Segmente (9; 59; 109) aufweist, die in Schlitzausnehmungen (135) in den Vertikalschenkeln (13; 63; 163) der Seitenteile (1; 51; 151) eingreifen und an der Außenseite der Seitenteile mit diesen verschweißt sind, **dadurch gekennzeichnet, dass** die Flanschschenkel (11; 61) an der Unterseite mit gewichtsreduzierenden Einziehungen (130) versehen sind und dass an den Seitenteilen (1, 2; 51, 52; 163) im Bereich des Obertrums (7; 157) Seiten- und/oder Deckprofile (16, 17; 77; 176) angeschweißt sind, an denen sich die Kratzer mit ihren Kratzerenden im Obertrum führen und deren Innenseiten eine an die Kratzerenden angepaßte Profilform aufweisen..

2. Rinnenschuß nach Anspruch 1, **dadurch gekennzeichnet, daß** zumindest das abbaustoßseitige Seitenteil (1; 51; 101; 151; 201; 251) mit einer Maschinenfahrbahn für eine Gewinnungsmaschine versehen ist.

3. Rinnenschuß nach Anspruch 2, **dadurch gekennzeichnet, daß** die Maschinenfahrbahn integraler Bestandteil des Flanschschenkels (111; 261) ist und von dessen Oberseite (140) gebildet ist.

4. Rinnenschuß nach Anspruch 2, **dadurch gekennzeichnet, daß** die Maschinenfahrbahn integraler Bestandteil des Vertikalschenkels (213) ist, der hierzu einen Endabschnitt mit T-förmigem Querschnitt aufweist und mit der Oberseite (240) des Querstegs (229) die Maschinenfahrbahn bildet.

5. Rinnenschuß nach einem der Ansprüche 1 bis 4, **dadurch gekennzeichnet, daß** die Seiten- und Deckprofile (16, 17) aus separaten Elementen bestehen, wobei vorzugsweise die Deckprofile (17) mit ihren Deckseiten eine Maschinenfahrbahn bilden.

6. Rinnenschuß nach einem der Ansprüche 1 bis 5, **dadurch gekennzeichnet, daß** die Vertikalschenkel (13; 63) einen Endabschnitt mit T-förmigem Querschnitt oder eine Stufe (18; 19; 68) od.dgl. aufweisen, auf dem die Deckprofile (17; 77) abgestützt aufliegen.

7. Rinnenschuß nach einem der Ansprüche 1 bis 6, **dadurch gekennzeichnet, daß** die Seiten- und Deckprofile integraler Bestandteil eines im Querschnitt T-förmigen Walzprofile (77) sind.

8. Rinnenschuß nach einem der Ansprüche 1 bis 7, **dadurch gekennzeichnet, daß** die Aufnahmeelemente aus randoffenen, angegossenen Taschen (14; 64; 114; 214) bestehen.

9. Rinnenschuß nach Anspruch 8, **dadurch gekennzeichnet, daß** die Taschen (114; 214) bündig mit dem oberen Endabschnitt des Vertikalschenkels (113, 213) abschließen und die Seitenteile (1, 2; 51, 52; 101; 151; 201; 251) über die gesamte Höhe versteifen.

10. Rinnenschuß nach einem der Ansprüche 1 bis 9, **dadurch gekennzeichnet, daß** die Seitenteile (1, 2; 51, 52) als zusätzliche Versteifung zu den Aufnahmetaschen (14; 64) mit angegossenen Vertikalrippen (15) versehen sind.

11. Rinnenschuß nach Anspruch 10, **dadurch gekennzeichnet, daß** die Vertikalrippen (15) mit Aussparungen (15A) versehen sind, an denen Hebezeuge befestigbar sind.

12. Rinnenschuß nach einem der Ansprüche 1 bis 11, **dadurch gekennzeichnet, daß** die Vertikalschenkel (113; 263) oberhalb des Fußflansches eine über die Höhe von Untertrum und Obertrum im wesentlichen konstante Dicke aufweisen.

13. Rinnenschuß nach einem der Ansprüche 1 bis 12, **dadurch gekennzeichnet, daß** der Vertikalschenkelabschnitt (163A) im Bereich des Obertrums (157) gegenüber dem im Bereich des Untertrums (156) um die Dicke des Seitenprofils (176) nach außen versetzt ausgebildet ist.

## Claims

1. A conveyor pan for underground face or gate conveyors, with a pair of side parts comprising cast parts (1; 51; 151) which include vertical arms (13; 63; 163) extending over the height of a bottom run (6; 56; 156) and a top run (7; 57; 157), a lower flange arm (11; 61) extending outwards to the rear, a foot flange (12; 62; 162) extending inwards onto whose lower side a base plate (4; 64) is welded which closes the bottom run to the bottom, as well as on end faces cast mounting elements (14; 64) for means of joining conveyor pans, and with a conveyor pan base (5; 55; 155), preferably made of rolled sheet metal and having tongue shaped segments (9; 59; 109) on both long sides which engage in cut-out slots (135) in the vertical arms (13; 63; 163) of the side parts (1; 51; 151) and are welded to them on the outer sides of the side parts, **characterized in that** the flange arms (11; 61) are provided with weight reducing depressions (130) on their undersides side and that side and/or top profiles (16; 17; 77; 176) are welded onto the side parts (1, 2; 51, 52; 163) in the region of the top run (7; 157) against which scraper ends are guided in the top run and whose inner sides have a profile shape matched to the scraper ends

2. A conveyor pan according to claim 1, **characterized in that** at least the side part (1; 51; 101; 151; 201; 251) on the face side is provided with a machine track for an extraction machine.

3. A conveyor pan according to claim 2, **characterized in that** the machine track is an integral component of the flange arm(111; 261) and is formed from its upper side (140) .

4. A conveyor pan according to claim 2, **characterized in that** the machine track is an integral component of the vertical arm, which has an end section with a Tshaped cross section and its upper side forms a cross web of the machine track.

5. A conveyor pan according to any of claims 1 to 4, **characterized in that** the side and top profiles (16, 17) comprise separate elements, whereby preferably the top sides of the top profiles (17) form a machine track.

6. A conveyor pan according to any of claims 1 to 5, **characterized in that** the vertical arms (13; 63) have an end section with a T-shaped cross section or a step (18; 19; 68) or similar, onto which a top profile (17; 77) abuts and is supported.

7. A conveyor pan according to any of claims 1 to 6, **characterized in that** the side and top profiles are integral components of a rolled profile (77) with a T-shaped cross section.

8. A conveyor pan according to any of claims 1 to 7, **characterized in that** the mounting elements comprise open edged cast pockets (14; 64; 114; 214).

9. A conveyor pan according to claim 8, **characterized in that** the pockets (114; 214) end flush with an upper end section of the vertical arm (113; 213) and stiffen the side parts (1, 2; 51, 52; 101; 151; 201; 251) over their entire height.

10. A conveyor pan according to any of claims 1 to 9, **characterized in that** the side parts (1, 2; 51, 52) are provided with cast vertical ribs (15) for additional stiffening to the mounting pockets (14; 64).

11. A conveyor pan according to claim 10, **characterized in that** the vertical ribs (15) are provided with cut-outs (15A) onto which lifting means may be fastened.

12. A conveyor pan according to any of claims 1 to 11, **characterized in that** the vertical arms (113; 265) have an essentially constant thickness over the height of the bottom run and the top run above the foot flange.

13. A conveyor pan according to any of claims 1 to 12, **characterized in that** the vertical arm section (163A) is displaced outwards in the region of the top run (157) as opposed to that in the region of the bottom run(156) by the thickness of the side profiles (176).

## Revendications

1. Partie de conduit pour convoyeur souterrain de taille et/ou en galerie, comprenant une paire de parties latérales constituées de pièces en fonte (1 ; 51 ; 151) qui comportent une traverse verticale (13 ; 63 ; 163) s'étendant au-delà de la hauteur du brin inférieur (6 ; 56 ; 156) et du brin supérieur (7 ; 57 ; 157), une traverse à ailette inférieure (11 ; 61) faisant épaulement vers l'extérieur, une traverse à ailette inférieure (11 ; 61) faisant saillie en arrière vers l'extérieur, une bride d'embase (12 ; 62; 162) faisant saillie en avant vers l'intérieur, une tôle de fond (4 ; 64) qui fait terminaison sur le bas étant soudée sur la face inférieure de ladite bride, ainsi que des éléments de réception (14 ; 64) coulés avec sur les faces frontales des moyens de liaison des parties de conduit, et comprenant un fond de conduit de convoyage (5 ; 55 ; 155) constitué de préférence d'une tôle laminée et qui présente sur deux côtés longitudinaux des segments (9 ; 59 ; 109) en forme de languette, lesquels s'engagent dans des évidements en fente (135) jusque dans les traverses verticales (13 ; 63 ; 163) des parties latérales (1 ; 51 ; 151) et lesquels sont soudés sur la face extérieure des parties latérales avec celles-ci, **caractérisée en ce que** les traverses à ailette (11 ; 61) sont munies sur la face inférieure de rétrécissements (130) qui réduisent le poids et **en ce que** des profilés latéraux et/ou de recouvrement (16 ; 17 ; 77 ; 176) - sur lesquels se guident les scrapeurs avec leurs extrémités de scrapeur dans le brin supérieur et dont les faces intérieures présentent une forme de profilé adaptée aux extrémités de scrapeur - sont soudés sur les parties latérales (1 ; 2 ; 51 ; 52 ; 163) dans la zone du brin supérieur (7 ; 157).

2. Partie de conduit selon la revendication 1, **caractérisée en ce qu'**au moins la partie latérale du côté front de taille (1 ; 51 ; 101 ; 151 ; 201 ; 251) est munie d'une trajectoire de machine pour une machine d'extraction.

3. Partie de conduit selon la revendication 2, **caractérisée en ce que** la trajectoire de machine fait partie intégrante de la traverse à ailette (111 ; 261) et est formée par la face supérieure (140) de celle-ci.

4. Partie de conduit selon la revendication 2, **caractérisée en ce que** la trajectoire de machine fait partie intégrante de la traverse verticale (213) qui présente à ces fins un tronçon terminal avec une section transversale en forme de T et qui forme la trajectoire de machine avec la face supérieure (240) de la barrette transversale (229).

5. Partie de conduit selon l'une des revendications 1 à 4, **caractérisée en ce que** les profilés latéraux et de recouvrement (16 ; 17) sont constitués d'éléments séparés, les profilés de recouvrement (17) formant de préférence une trajectoire de machine avec leurs côtés de recouvrement.

6. Partie de conduit selon l'une des revendications 1 à 5, **caractérisée en ce que** les traverses verticales (13 ; 63) présentent un tronçon terminal avec une section transversale en forme de T ou un gradin (18 ; 19 ; 68) ou similaire, sur lequel viennent se poser les profilés de recouvrement (17 ; 77) par soutien.

7. Partie de conduit selon l'une des revendications 1 à 6, **caractérisée en ce que** les profilés latéraux et de recouvrement font partie intégrante d'un profilé laminé à section transversale en forme de T.

8. Partie de conduit selon l'une des revendications 1 à 7, **caractérisée en ce que** les éléments de réception sont constitués de poches (14 ; 64 ; 114 ; 214) qui sont coulées avec et qui sont ouvertes en bordure.

9. Partie de conduit selon la revendication 8, **caractérisée en ce que** les poches (114; 214) se terminent à fleur avec le tronçon terminal supérieur de la traverse verticale (113 ; 213) et **en ce que** les parties latérales (1 ; 2 ; 51 ; 52 ; 101 ; 151 ; 201 ; 251) rigidifient sur toute la hauteur.

10. Partie de conduit selon l'une des revendications 1 à 9, **caractérisée en ce que** les parties latérales (1 ; 2 ; 51; 52) sont munies de nervures verticales (15) coulées avec, comme renfort supplémentaire aux poches de réception (14 ; 64).

11. Partie de conduit selon la revendication 10, **caractérisée en ce que** les nervures verticales (15) sont munies d'évidements (15A) auxquels des engins de levage peuvent être fixés.

12. Partie de conduit selon l'une des revendications 1 à 11, **caractérisée en ce que** les traverses verticales (113 ; 263) présentent au-dessus de la bride d'embase une épaisseur essentiellement constante au-delà de la hauteur du brin inférieur et du brin supérieur.

13. Partie de conduit selon l'une des revendications 1 à 12, **caractérisée en ce que** le tronçon de traverse verticale (163A) est réalisé avec un décalage vers l'extérieur, lequel est égal à l'épaisseur du profilé latéral (176), dans la zone du brin supérieur (157) à l'opposé du tronçon dans la zone du brin inférieur (156).
